# EUROPEAN PATENT APPLICATION

(11) **EP 2 399 772 A2**
(43) Date of publication of application: **28.12.2011**
(21) Application number: 11169417.0
(22) Date of filing: 10.06.2011
(51) Int. Cl.: B60L 11/18

(54) **Charge controller and method of operating the same**

(30) Priority: 14.06.2010 JP 2010134646
(71) Applicant: Kabushiki Kaisha Toyota Jidoshokki, Kariya-shi, Aichi 448-8671 (JP)
(72) Inventor: Ankyu, Tatsuya, Kariya-shi, Aichi 448-8671 (JP)
(74) Representative: TBK

(57) **Abstract**

A charge controller (21) supplies current to a plurality of charging devices (21-1,22-2,22-3,22-4) for charging a battery for a vehicle including an electric vehicle and a plug-in hybrid vehicle. The charge controller includes a rechargeable battery (24), a current supply unit (25) and a current distribution controller (27). The rechargeable battery stores electric power supplied from a power distribution line. The current supply unit supplies current from the rechargeable battery to the charging devices. The current distribution controller determines distribution of the current supplied through the current supply unit to the charging devices based on the charging data about the vehicle received from the charging devices.

## Description

### BACKGROUND OF THE INVENTION

The present invention relates to a charge controller for a vehicle and a method of operating the same.

A hybrid vehicle having both a gasoline engine and an electric motor and an electric vehicle have been put into practical use. A charging device for charging a battery for the hybrid vehicle or the electric vehicle has been also put into practical use.

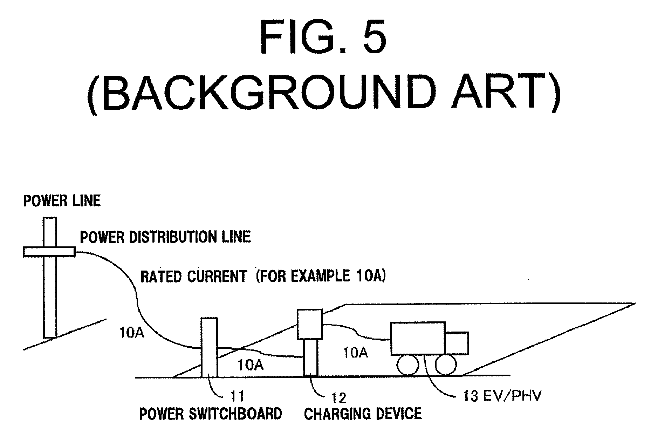

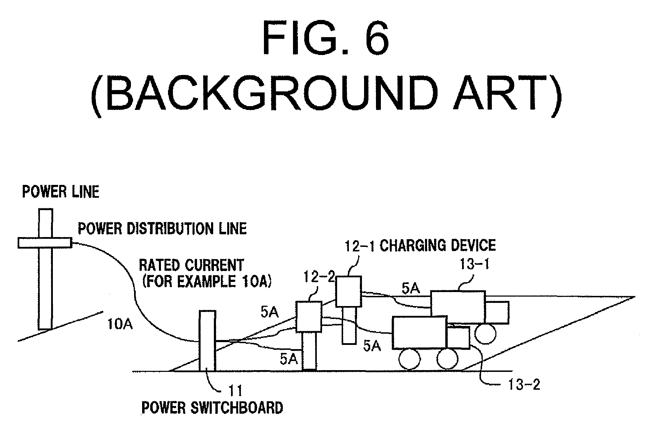

Fig. 5 is a schematic view showing an example in which an alternating-current power source (hereinafter referred to as "AC power source") supplies current to a single charging device, and Fig. 6 is a schematic view showing another example in which an AC power source supplies current to two charging devices. According to the example shown in Fig. 5, a single charging device 12 is connected to a power switchboard 11, and the power switchboard 11 may supply current of 10 ampere to the charging device 12 when the rated current of the AC power source is 10 ampere.

According to the other example shown in Fig. 6, the charging devices 12 and 13 are connected to a power switchboard 11, and the power switchboard 11 may supply current of at most 5 ampere to the respective charging devices 12 and 13 when rated current of the AC power source is 10 ampere. In such a case, it takes a longer time to charge a vehicle battery.

Japanese Patent Application Publication No. 5-316606 discloses a charging system for an electric vehicle in which a locking device and charging terminals are integrally provided in a charging terminal, and charging is started when the locking terminal is locked, and charging is stopped when the locking terminal is unlocked, so that the charging operation is simplified.

Japanese Patent Application Publication No. 2003-204625 discloses a power stable supply device in which a chopper circuit and a rechargeable battery are provided and the rechargeable battery is charged for ensuring sufficient instantaneous power supply capacity.

The present invention is directed to providing a charge controller and a method of operating the same making possible charging a plurality of vehicles without increasing the rated current of power distribution line.

### SUMMARY OF THE INVENTION

In accordance with the present invention, a charge controller supplies current to a plurality of charging devices for charging a battery for a vehicle including an electric vehicle and a plug-in hybrid vehicle. The charge controller includes a rechargeable battery, a current supply unit and a current distribution controller. The rechargeable battery stores electric power supplied from an electric power distribution line. The current supply unit supplies current from the rechargeable battery to the charging devices. The current distribution controller determines distribution of the current supplied through the current supply unit to the charging devices based on the charging data about the vehicle received from the charging devices.

A method of operating a charge controller for supplying current to a plurality of charging devices for charging a battery for a vehicle including an electric vehicle and a hybrid vehicle is characterized by the steps of receiving charging data about the vehicle from the charging devices and determining distribution of the current supplied to the charging devices from a rechargeable battery storing electric power supplied from an electric power distribution line.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic configuration diagram showing a charging system according to a preferred embodiment of the present invention;
Fig. 2 is a schematic diagram showing a current/voltage controller in the charging system of Fig. 1;
Fig. 3 is a flowchart showing operation of a charge controller of the charging system of Fig. 1;
Fig. 4 is a schematic diagram showing operation of a current distribution controller and the current/voltage controller in the charging system of Fig. 1;
Fig. 5 is an illustrative view showing an example of a charging system according to a background art; and
Fig. 6 is an illustrative view showing another example of the charging system according to the background art.

### DETAILED DESCRIPTION OF THE PREFERRED EMBODIMENTS

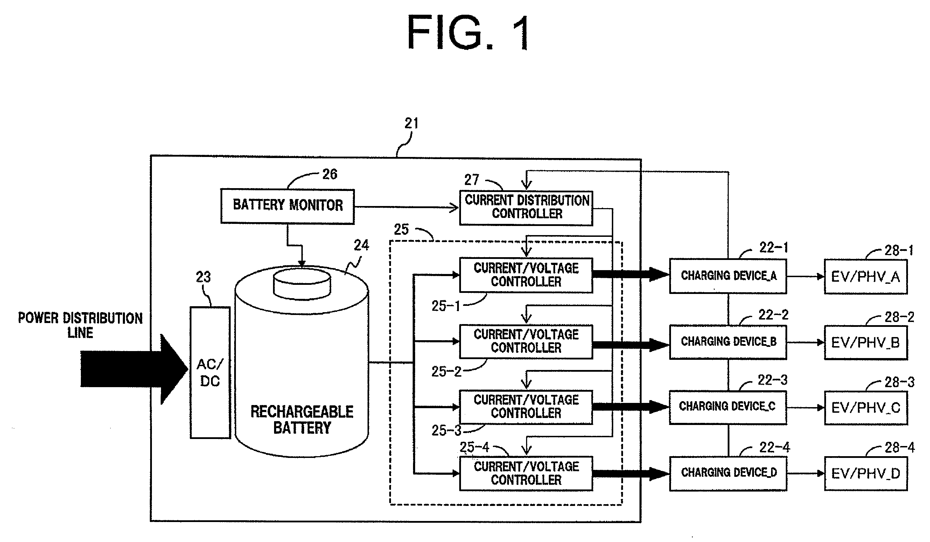

The following will describe a charging system according to a preferred embodiment of the present invention with reference to Figs. 1 through 4. Referring to Fig. 1 showing a charging system according to the preferred embodiment of the present invention, the charging system has a charge controller 21 for controlling electric power supplied through a power distribution line, and four charging devices 22-1, 22-2, 22-3 and 22-4.

The charge controller 21 has an AC to DC converter 23 for converting AC voltage supplied from a power switchboard connected to the AC power distribution line to DC voltage. The charge controller 21 further has a rechargeable battery 24, a current/vottage control unit 25, a battery monitor 26 for monitoring the voltage of the rechargeable battery 24 and a current distribution controller 27.

The current/voltage control unit 25 serving as a current supply unit includes four current/voltage controllers 25-1, 25-2, 25-3 and 25-4 and controls to supply current from the rechargeable battery 24 to the respective charging devices 22-1, 22-2, 22-3 and 22-4.

The battery monitor 26 monitors the charging amount of the rechargeable battery 24 and informs the current distribution controller 27 of the charging amount of the rechargeable battery 24. The current distribution controller 27 receives charging data of the charging amount of the rechargeable battery 24 from the battery monitor 26 and also receives charging data about electric vehicles or plug-in hybrid vehicles (EV/PHV, hereinafter referred to merely "vehicle") 28-1, 28-2, 28-3 and 28-4 from the charging devices 22-1, 22-2, 22-3 and 22-4. Based on the received data, the current distribution controller 27 determines distribution of currents from the current/vottage controllers 25-1, 25-2, 25-3 and 25-4 to the respective charging devices 22-1, 22-2, 22-3 and 22-4. Data communication between the current distribution controller 27 and the respective charging devices 22-1, 22-2, 22-3 and 22-4 is done through wire communication or wireless communication.

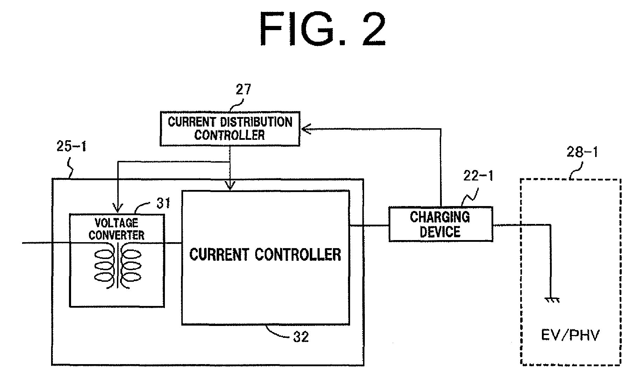

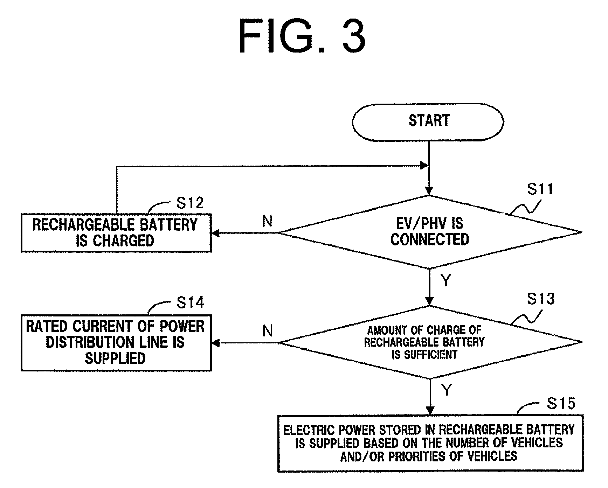

Fig. 2 shows the current/voltage controllers 25-1 and its related devices. The current/voltage controller 25-1 has a voltage converter 31 for converting DC voltage to AC voltage or to any specific DC voltage and a current controller 32 for variably controlling the current. The current controller 32 controls current supplied to the charging device 22-1 based on a control signal from the current distribution controller 27. Referring to Fig. 3 showing a flowchart illustrating operation of the charge controller 21, it is determined at step S11 whether or not the vehicle 28-1, 28-2, 28-3 and 28-4 are connected to the charging devices 22-1, 22-2, 22-3 and 22-4, respectively. The determination at step 11 is conducted by using the charging data from the charging devices 22-1, 22-2, 22-3 and 22-4 indicating whether or not the vehicles 28-1, 28-2, 28-3 and 28-4 are connected to the charging devices 22-1, 22-2, 22-3 and 22-4, respectively.

If NO at step S11, the rechargeable battery 24 is charged at step S12. If YES at step S11, it is determined at step S13 whether or not the amount of charge of the rechargeable battery 24 is sufficient. The determination at step 13 is conducted based on the monitoring data from the battery monitor 26.

If NO at step S13, the rated current of the power distribution line is supplied to the respective charging devices 22-1, 22-2, 22-3 and 22-4, at step 14.

If YES at step S13, the distribution of current from the rechargeable battery 24 to the respective charging devices 22-1, 22-2, 22-3 and 22-4 through the current/voltage controllers 25-1, 25-2, 25-3 and 25-4 is determined at step 15 based on the number of the vehicles 28-1, 28-2, 28-3 and 28-4 connected to the charging devices 22-1, 22-2, 22-3 and 22-4 and priorities of the vehicles to be charged. Specifically, the step 15 is performed to determine which vehicle should be charged preferentially, by using the charging data about the vehicle provided from the charging devices 22-1, 22-2, 22-3 and 22-4. Based on the result of the determination at step 15, distribution of current to the respective charging devices 22-1, 22-2, 22-3 and 22-4 from the current/voltage controllers 25-1, 25-2, 25-3 and 25-4 is determined.

According to the charging system of the preferred embodiment, electric power supplied through the power distribution line is stored in the rechargeable battery 24, and the stored electric power in the rechargeable battery 24 is supplied to the respective charging devices 22-1, 22-2, 22-3 and 22-4, so that current greater than the rated current of the power distribution line may be supplied to the charging devices 22-1, 22-2, 22-3 and 22-4. In addition, the distribution of current may be appropriately determined based on the charging data from the charging devices 22-1, 22-2, 22-3 and 22-4. For example, current to be supplied to the charging device for a specific vehicle having the highest priority may be set to be greater than that to be supplied to the other charging devices, so that charging time for the vehicle of the highest priority may be shortened.

It may be practiced that the rechargeable battery 24 is charged during nighttime when electric power rate is relatively low, and the electric power stored in the rechargeable battery 24 is supplied to the charging devices 22-1, 22-2, 22-3 and 22-4 during daytime. A plurality of the secondary batteries such as 24 may be provided in the charging system, and the secondary batteries may be charged in turn. In this case, current several times as large as the rated current may be supplied to the vehicles.

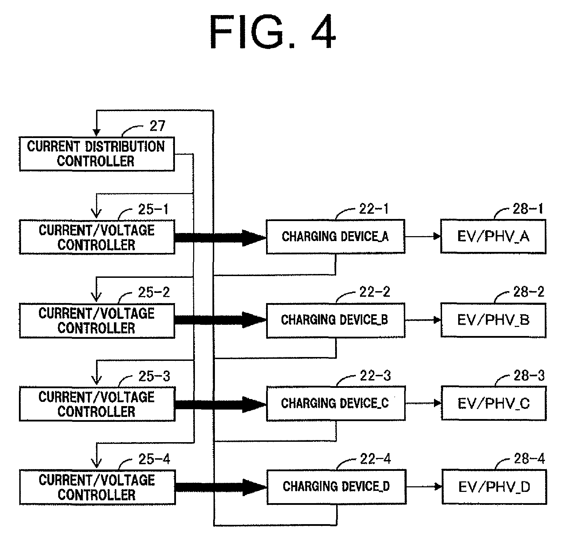

Fig. 4 illustrates an example of the operation of the current distribution controller 27 and the current/voltage control unit 25 in such a case that a user of a charging device selects either normal charging mode by paying normal fee or quick charging mode by paying extra fee for using a priority service in charging his/her vehicle and the current distribution controller 27 determines the distribution of current to be supplied to the respective charging devices 22-1, 22-2, 22-3 and 22-4.

Selection buttons for selecting normal or quick charging mode as a priority are provided in the charging devices 22-1, 22-2, 22-3 and 22-4, respectively.
The user operates one of the selection buttons according to the charging mode.

When the selection button is operated, the charging devices 22-1, 22-2, 22-3 and 22-4 generates to the current distribution controller 27 the charging data indicating the priority according to the operated selection button. For example, when a user of the charging device 22-1 operates the selection button for the quick charging by paying extra fee, the charging data indicating the quick charging is outputted from the charging device 22-1 to the current distribution controller 27. In this exemplary case, it is assumed that the charging devices 22-2, 22-3 and 22-4 are used for normal charging. Therefore, the charging devices 22-2, 22-3 and 22-4 output the charging data for the normal charging.

The current distribution controller 27 receives from the charging device 22-1 the charging data indicating the quick charging for the charging device 22-1, and from the charging devices 22-2, 22-3 and 22-4 the charging data indicating the normal charging for the charging devices 22-2, 22-3 and 22-4. Accordingly, the current distribution controller 27 controls the operation of the current/voltage controller 25-1, 25-2, 25-3 and 25-4, as follows.

The current distribution controller 27 commands the current/voltage controller 25-1 to supply to the charging device 22-1 current of 10 ampere that is twice as large as the normal current. Simultaneously, the current distribution controller 27 commands the other current/voltage controllers 25-2, 25-3 and 25-4 to supply current of 5 ampere to each of the charging devices 22-2, 22-3 and 22-4.

In this case, the current distribution controller 27 receives the charging data indicating the priority from the charging devices 22-1, 22-2, 22-3 and 22-4 and controls the distribution of current being supplied from the rechargeable battery 24 to the charging devices 22-1, 22-2, 22-3 and 22-4 through the current/voltage controllers 25-1, 25-2, 25-3 and 25-4 based on the received charging data. Thus, current whose amperage is more than the rated current of the power distribution line may be supplied to the charging devices 22-1, 22-2, 22-3 and 22-4 by utilizing the rechargeable battery 24. The distribution of current is determined based on the charging data of the priority received from the charging devices 22-1, 22-2, 22-3 and 22-4, so that charging time may be shortened by increasing the amperage of the current supplied to a vehicle having the highest priority.

According to the preferred embodiment, current is distributed from the rechargeable battery 24 to a plurality of the charging devices 22-1, 22-2, 22-3 and 22-4 so that the current is shared by the charging devices 22-1,22-2,22-3 and 22-4. Alternatively, supplying of current from the rechargeable battery 24 to the respective charging devices 22-1, 22-2, 22-3 and 22-4 may be done separately so that charging may be performed for one vehicle at a time. For example, firstly the maximum current is supplied from the rechargeable battery 24 to the charging device 22-1 of the highest or first priority through the current/voyage controller 25-1 for a predetermined length of time. After an elapse of the predetermined time, the same maximum current is supplied from the rechargeable battery 24 then to a charging device of the second priority. In this case, current sharing may be used.

The charge controller 21 may be arranged so as to permit a user of the charging device to input the charging data of his/her scheduled time of using the vehicle and also the remaining amount of electric power in the battery through the charging devices 22-1, 22-2, 22-3 and 22-4. In this case, the current distribution controller 27 receives the charging data from the charging devices 22-1, 22-2, 22-3 and 22-4 and determines the distribution of current from the current/voltage controllers 25-1, 25-2, 25-3 and 25-4 to the charging devices 22-1, 22-2, 22-3 and 22-4 based on the received charging data.

Let us suppose a case in which a first user of the charging device 22-1 inputs the charging data of 6:00 am as the scheduled time of using the vehicle and 20 % as the remaining amount of electric power in the battery, a second user of the charging device 22-2 inputs data of 2:00 pm and 80 %, and a third user of the charging device 22-3 inputs data of 8:00 AM and 50 %.

Receiving the charging data of scheduled time of using the vehicle and of the remaining amount of electric power in the battery, the current distribution controller 27 determines the distribution of current supplied to the respective charging devices 22-1, 22-2, 22-3 and 22-4 so that the vehicle having the earliest scheduled time is charged preferentially.

In the charge controller 21 thus constructed, when charging is performed according to a schedule, the distribution of current is determined such that the charging device for charging the vehicle having the earliest scheduled time has the highest priority to charge the vehicle.

A charge controller supplies current to a plurality of charging devices for charging a battery for a vehicle including an electric vehicle and a plug-in hybrid vehicle. The charge controller includes a rechargeable battery, a current supply unit and a current distribution controller. The rechargeable battery stores electric power supplied from a power distribution line. The current supply unit supplies current from the rechargeable battery to the charging devices. The current distribution controller determines distribution of the current supplied through the current supply unit to the charging devices based on the charging data about the vehicle received from the charging devices.

## Claims

1. A charge controller (21) supplying current to a plurality of charging devices (22-1, 22-2, 22-3, 22-4) for charging a battery for a vehicle (28-1, 28-2, 28-3, 28-4) including an electric vehicle and a plug-in hybrid vehicle comprising:
a rechargeable battery (24) storing electric power supplied from a power distribution line;
a current supply unit (25) supplying current from the rechargeable battery (24) to the charging devices (22-9, 22-2, 22-3, 22-4), and
a current distribution controller (27) determining distribution of the current supplied through the current supply unit (25) to the charging devices (22-1, 22-2, 22-3, 22-4) based on the charging data about the vehicle (28-1, 28-2, 28-3, 28-4) received from the charging devices (22-1, 22-2, 22-3, 22-4).

2. The charge controller (21) according to claim 1, **characterized in that** the charging data is scheduled time of using the vehicle (28-1, 28-2, 28-3, 28-4) and/or data of the remaining amount of electric power in the battery of the vehicle (28-1, 28-2, 28-3, 28-4).

3. The charge controller (21) according to claim 2, **characterized in that** the distribution of the current is determined such that the charging device (22-1, 22-2, 22-3, 22-4) for charging the vehicle (28-1, 28-2, 28-3, 28-4) having the earliest scheduled time is charged preferentially.

4. A method of operating a charge controller (21) for supplying current to a plurality of charging devices (22-1, 22-2, 22-3, 22-4) for charging a battery for a vehicle (28-1, 28-2, 28-3, 28-4) including an electric vehicle and a hybrid vehicle, **characterized by** the steps of:
receiving charging data about the vehicle (28-1, 28-2, 28-3, 28-4) from the charging devices (22-1, 22-2, 22-3, 22-4), and
determining distribution of the current supplied to the charging devices (22-1, 22-2, 22-3, 22-4) from a rechargeable battery (24) storing electric power supplied from a power distribution line.

5. The method according to 4, **characterized in that** the charging data is scheduled time of using the vehicle (28-1, 28-2, 28-3, 28-4) and/or data of the remaining amount of electric power in the battery of the vehicle (28-1, 28-2, 28-3, 28-4).
